(19)

**Europäisches Patentamt**
**European Patent Office**
**Office européen des brevets**

(11) **EP 4 317 301 A1**

(12) **EUROPEAN PATENT APPLICATION**

(43) Date of publication:
**07.02.2024 Bulletin 2024/06**

(21) Application number: **22188773.0**

(22) Date of filing: **04.08.2022**

(51) International Patent Classification (IPC):
**C08L 23/12** *(2006.01)*

(52) Cooperative Patent Classification (CPC):
(C-Sets available)
**C08L 23/12;** C08L 2203/16; C08L 2203/202;
C08L 2205/03; C08L 2207/20 (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Basell Poliolefine Italia S.r.l.**
**20121 Milano (IT)**

(72) Inventors:
• **Cavalieri, Claudio**
**44122 Ferrara (IT)**

• **Cova, Cristina**
**44122 Ferrara (IT)**
• **Riemma, Antonio**
**44122 Ferrara (IT)**
• **De Capua, Alberta**
**44122 Ferrara (IT)**
• **Bocchino, Marco**
**44122 Ferrara (IT)**
• **Tartari, Davide**
**44122 Ferrara (IT)**

(74) Representative: **LyondellBasell**
**c/o Basell Poliolefine Italia**
**Intellectual Property**
**P.le Donegani 12**
**44122 Ferrara (IT)**

(54) **POLYOLEFIN COMPOSITIONS OBTAINED FROM RECYCLED POLYOLEFINS**

(57) A propylene polymer composition comprising:
A) 50 wt% to 80 wt%, of a propylene homopolymer or a propylene ethylene copolymer;
B) 50 wt% to 20 wt% of a blend comprising:
T1) from 10 wt% to 50 wt% of a copolymer of ethylene and one monomer selected from 1-butene, 1-hexene or 1-octene;
T2) from 20 wt% to 80 wt% of recycled polyethylene (r-PE).

EP 4 317 301 A1

**(Cont. next page)**

(52) Cooperative Patent Classification (CPC): (Cont.)

C-Sets
**C08L 23/12, C08L 23/06, C08L 23/0815**

**Description**

FIELD OF THE INVENTION

The present disclosure relates to soft polypropylene compositions containing recycled elastomeric material that can be used in preparation of extruded articles.

BACKGROUND OF THE INVENTION

Polyolefin compositions having elastic properties while maintaining a good thermoplastic behavior have been used in many application fields, due to the valued properties which are typical of polyolefins, such as chemical inertia, mechanical properties and nontoxicity. Moreover, they can be advantageously transformed into finished products with the same techniques used for thermoplastic polymers. In particular, flexible polymer materials are widely used in the medical field, as well as for packaging, extrusion coating and electrical wires and cables covering.

Elastic polypropylene compositions retaining good thermoplastic behavior have been obtained in the art by way of sequential copolymerization of propylene, optionally containing minor quantities of olefin comonomers, and then ethylene/propylene or ethylene/alpha-olefin copolymers mixtures. Catalysts based on halogenated titanium compounds supported on magnesium chloride are commonly used for this purpose. For instance, EP-A-472 946 describes flexible elastoplastic polyolefin compositions comprising, in parts by weight: A) 10-50 parts of an isotactic propylene homopolymer or copolymer; B) 5-20 parts of an ethylene copolymer, insoluble in xylene at room temperature; and C) 40-80 parts of an ethylene/propylene copolymer containing less than 40% by weight of ethylene and being soluble in xylene at room temperature; the intrinsic viscosity of said copolymer is preferably from 1.7 to 3 dl/g. Said compositions are relatively flexible and have good elastic properties.

In addition, polyolefin compositions, although being appreciated in terms of performances, give raise to concerns in terms of sustainability with particular reference to the fact that their production is based on the use of non-renewable sources.

As a result, a common attempt to mitigate the problem is that of replacing, at least in part, virgin polyolefin compositions with variable amounts of recycled plastic materials.

The recycled plastic polyolefin derive from streams of post-consumer waste (PCW) or post-industrial waste (PIW).

One of the key problems in polyolefin recycling, is the difficulty to quantitatively separate the various types of polymers so that the commercially available recycled products are almost invariably contaminated with heterogeneous materials of various source.

This fact leads to the consequence that polymer compositions including recycled materials are perceived of being affected by lower reliability and lower performances with respect to the compositions made of solely virgin polymers.

It has now been unexpectedly found that it is possible to have an improved property profile especially in terms of impact and modulus values when a blend of recycled polymers is added to a virgin polypropylene.

SUMMARY OF THE INVENTION

It is therefore an object of the present disclosure a propylene polymer composition having a value of melt flow rate (ISO 1133-1 230°C/2.16 kg) ranging from 3.0 g/l0min to 70.0 g/l0min comprising:

A) 50 wt% to 80 wt%, of a propylene homopolymer or a propylene ethylene copolymer containing up to 22.0 wt% of ethylene, said propylene homopolymer or a propylene ethylene copolymer having a melt flow rate (ISO 1133-1 230°C/2.16 kg) ranging from 20.0 to 100.0 g/10 min;
B) 50 wt% to 20 wt% of a blend comprising:

T1) from 10 wt% to 50 wt% of a copolymer of ethylene and one monomer selected from 1-butene, 1-hexene or 1-octene containing; said copolymer having preferably a MFR (measured at 190°C 2.16 kg of load) comprised between 0.5 g/10 min and 55.0 g/10 min; preferably from 1.0 g/10 min and 20.0 g/10 min; and having a Shore A hardness (ASTM 2240) ranging from 30 to 70.
T2) from 50 wt% to 90 wt% of recycled polyethylene (r-PE) having a melt flow rate (190°C/2.16 Kg) from 0.1 to 10 g/10 min and containing an amount of polypropylene inclusions ranging from 1 wt% to 15 wt% of the total r-PE component,
the sum of the amount of T1 and T2 being 100;

the sum of the amount of A) and B) being 100.

# EP 4 317 301 A1

DETAILED DESCRIPTION OF THE INVENTION

An object of the present disclosure a propylene polymer composition having a value of melt flow rate (ISO 1133-1 230°C/2.16 kg) ranging from 3.0 g/lOmin to 70.0 g/lOmin; preferably from 8.0 g/lOmin to 45.0 g/lOmin; more preferably from 10.0 g/lOmin to 35.0 g/10min comprising or consisting essentially of:

> A) 50 wt% to 80 wt%, preferably 55 wt% to 75 wt%; more preferably 58 wt% to 72 wt%; even more preferably from 55 wt% to 65 wt% of a propylene homopolymer or a propylene ethylene copolymer containing up to 22.0 wt%; preferably up to 12.0 wt%; more preferably up to 7.0 wt% of ethylene, said propylene homopolymer or a propylene ethylene copolymer having a melt flow rate (ISO 1133-1 230°C/2.16 kg) ranging from 20.0 to 100.0g/10min preferably from 60.0 to 90.0g/10min; more preferably from 65.0 to 85.0g/10min;
> B) 20 wt% to 50 wt% preferably from 25 wt% to 45 wt%; more preferably from 28 wt% to 42; even more preferably from 3wt%5 to 45 wt% of a blend comprising:

>> T1) from 10 wt% to 50 wt%; preferably from 15 wt% to 40 wt%, more preferably from 20 wt% to 30 wt% of a copolymer of ethylene and one monomer selected from 1-butene, 1-hexene or 1-octene, said copolymer having a MFR (measured at 190°C 2.16 kg of load) comprised between 0.5 g/10 min and 55.0 g/10 min; preferably from 1.0 g/10 min and 20.0 g/10 min; Preferred comonomers are 1-butene and 1-octene, more preferably 1-octene, and having a Shore A hardness (ASTM 2240) ranging from 20 to 80 preferably from 30 to 70; more preferably from 40 to 60;
>> T2) from 50 wt% to 90 wt%; preferably from 60 wt% to 85 wt%, more preferably from 70 wt% to 80 wt% of recycled polyethylene (r-PE) having a melt flow rate (190°C/2.16 Kg) from 0.1 to 10.0 g/10 min and containing an amount of polypropylene inclusions ranging from 1 wt% to 15 wt% of the total r-PE component;
>> the sum of the amounts of T1 and T2 being 100;
>> the sum of the amounts of A) and B) being 100.

The term "copolymer" as used herein refers to both polymers with two different recurring units and polymers with more than two different recurring units, such as terpolymers, in the chain. By "ambient or room temperature" is meant therein a temperature of 25 °C.

By the term "crystalline propylene polymer" is meant in the present application a propylene polymer having an amount of isotactic pentads (mmmm), measured by $^{13}$C-MNR on the fraction insoluble in xylene at 25° C, higher than 70 molar %; by "elastomeric" polymer is meant a polymer having solubility in xylene at ambient temperature higher than 50 wt%.

The term "consisting essentially of', as used herein in connection with a polymer or polymer composition means that, in addition to those components which are mandatory, other components may also be present in the polymer or in the polymer composition, provided that the essential characteristics of the polymer or of the composition are not materially affected by their presence. According to the present disclosure, examples of components that, when present in customary amounts in a polymer or in a polymer composition, do not materially affect their characteristics are the catalyst residues, antistatic agents, melt stabilizers, light stabilizers, antioxidants, antiacids.

The features of the components forming the polypropylene composition are not inextricably linked to each other. This means that a certain level of preference of one the features should not necessarily involve the same level of preference of the remaining features of the same or different components. On the contrary, it is intended in the present disclosure that any component (A) to (B) and any preferred range of features of components (A) to (B) can be combined with any preferred range of one or more of the features of components (A) to (B) and with any possible additional component, and its features, described in the present disclosure.

Preferably component A) is a virgin resin; preferably component A is propylene homopolymer.

The melting temperature of the component A) preferably ranges from 135°C to 165°C. When the component A) is a homopolymer the melting temperature, determined via DSC, preferably ranges from 155°C to 165°C while for a copolymer it preferably ranges from 135°C to 155°C.

Component A) can be prepared by polymerizing propylene, optionally in mixture with ethylene in the presence of a catalyst comprising the product of the reaction between:

> i) a solid catalyst component comprising Ti, Mg, Cl, and at least an internal electron donor compound;
> ii) an alkylaluminum compound and,
> iii) an external electron-donor compound having the general formula:
> $(R^7)_a(R^8)_b Si(OR^9)_c$, where a and b are integers from 0 to 2, c is an integer from 1 to 4 and the sum (a+b+c) is 4; $R^7$, $R^8$, and $R^9$, are alkyl, cycloalkyl or aryl radicals with 1-18 carbon atoms optionally containing heteroatoms.

The internal donor is preferably selected from the esters of mono or dicarboxylic organic acids such as benzoates, malonates, phthalates and certain succinates. Examples of internal donors are described in US 4522930A, EP 045977A2 and international patent applications WO 00/63261 and WO 01/57099. Particularly suited are the phthalic acid esters and succinate acids esters. Alkylphthalates are preferred, such as diisobutyl, dioctyl and diphenyl phthalate and benzyl-butyl phthalate.

The particles of solid component (i) may have substantially spherical morphology and average diameter ranging between 5 and 150 $\mu$m, preferably from 20 to 100 $\mu$m and more preferably from 30 to 90 $\mu$m. As particles having substantially spherical morphology, those are meant wherein the ratio between the greater axis and the smaller axis is equal to or lower than 1.5 and preferably lower than 1.3.

The amount of Mg may preferably range from 8 to 30% more preferably from 10 to 25wt. %.

The amount of Ti may range from 0.5 to 7% and more preferably from 0.7 to 5wt. %.

According to one method, the solid catalyst component (i) can be prepared by reacting a titanium compound of formula Ti(OR)q-yXy, where q is the valence of titanium and y is a number between 1 and q, preferably TiCl$_4$, with a magnesium chloride deriving from an adduct of formula MgCl2•pROH, where p is a number between 0.1 and 6, preferably from 2 to 3.5, and R is a hydrocarbon radical having 1-18 carbon atoms. The adduct can be suitably prepared in spherical form by mixing alcohol and magnesium chloride, operating under stirring conditions at the melting temperature of the adduct (100-130°C). Then, the adduct is mixed with an inert hydrocarbon immiscible with the adduct thereby creating an emulsion which is quickly quenched causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is of lower than 3, preferably between 0.1 and 2.5. The reaction with the Ti compound can be carried out by suspending the adduct (dealcoholated or as such) in cold TiCl$_4$; the mixture is heated up to 80-130°C and kept at this temperature for 0.5-2 hours. The treatment with TiCl4 can be carried out one or more times. The electron donor compound can be added in the desired ratios during the treatment with TiCl$_4$.

The alkyl-Al compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as AlEt$_2$Cl and Al$_2$Et$_3$Cl$_3$, possibly in mixture with the above cited trialkylaluminums. The Al/Ti ratio is higher than 1 and may preferably range between 50 and 2000.

Particularly preferred are the silicon compounds (iii) in which a is 1, b is 1, c is 2, at least one of R$^7$ and R$^8$ is selected from branched alkyl, cycloalkyl or aryl groups with 3-10 carbon atoms optionally containing heteroatoms and R9 is a C1-C10 alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane. Moreover, are also preferred the silicon compounds in which a is 0, c is 3, R8 is a branched alkyl or cycloalkyl group, optionally containing heteroatoms, and R9 is methyl. Examples of such preferred silicon compounds are cyclohexyltrimethoxysilane, t-butyltrimethoxysilane and thexyltrimethoxysilane.

The external electron donor compound (iii) is used in such an amount to give a molar ratio between the organoaluminum compound and said external electron donor compound (iii) of from 0.1 to 200, preferably from 1 to 100 and more preferably from 3 to 50.

The polymerization process can be carried out in gas-phase, operating in one or more fluidized or mechanically agitated bed reactors, slurry polymerization using as diluent an inert hydrocarbon solvent, or bulk polymerization using the liquid monomer (for example propylene) as a reaction medium. If needed, component A can be subject to a chemical treatment with organic peroxides in order to lower the average molecular weight and increase the melt flow index up to the value needed for the specific application.

The component (T1) is endowed with one or more of the following features:

i) tensile strength at break (ASTM 638) ranging from 0.5 to 10.0 MPa, preferably from 0.8 to 5.0 MPa, more preferably from 1.0 to 3.0 MPa;

ii) Elongation at break (ASTM 638) ranging from 300 % to 2000%; preferably from 400% to 1800%; more preferably from 500% to 1650%;

iii) Shore A hardness (ASTM 2240) ranging from 20 to 80; preferably from 30 to 70; even more preferably from 35 to 65.

Component T1 can be an ethylene 1-octene copolymer sold by Dow under the tradename Engage such as engage 8540, engage 8480, engage 8450, engage 8402, engage 8440, engage 8003, engage 8401, engage 8411, engage 8452, engage 8150, engage 8157, engage 8100, engage 8107, engage 8200, engage 8207, engage 8407, engage 8180, engage 8187, engage 8137, engage 8842. Component T1 can be an ethylene block copolymer sold by Dow under the tradename Infuse such as Infuse 9807, Infuse 9507, Infuse 9107, Infuse 9007, Infuse9077, Infuse9817, Infuse9500, Infuse 9100, Infuse 9000, Infuse 9010, Infuse 9900, Infuse 9530. preferred Infuse grade are (density measured according to ASTM D792):

INFUSE 9107 Olefin Block Copolymer- OBC- Density of 0.866 g/cm3 and MFR (measured at 190°C 2.16 kg of load) of 1.0 g/10 min (190°C/2.16 kg).
INFUSE 9507 Olefin Block Copolymer- OBC- Density of 0.866 g/cm3 and MFR (measured at 190°C 2.16 kg of load) of 5.0 g/10 min (190°C/2.16 kg).
INFUSE 9807 Olefin Block Copolymer- OBC - Density of 0.866 g/cm3 and MFR (measured at 190°C 2.16 kg of load) of 15 g/10 min (190°C/2.16 kg).
INFUSE 9817 Olefin Block Copolymer- OBC - Density of 0.877 g/cm3 and MFR (measured at 190°C 2.16 kg of load) of 10 g/10 min (190°C/2.16 kg).

Thus preferably T1 is an ethylene 1-octene block copolymer having a density (ASTM D792) ranging from 0.863 g/cm$^3$ to 0.869 g/cm$^3$ a MFR (measured at 190°C 2.16 kg of load) ranging from 0.5 g/10 min to 16 g/10 min. More preferably component T1 has a Shore A (ASTM D2240) ranging from 45 to 65 and a melting temperature (DSC) ranging from 100°C to 125°C.

The component (T2) is recycled polyethylene PE it preferably is crystalline or semicrystalline high density PE (r-HDPE) selected from commercial PCW (Post Consumer Waste for example from municipality). Preferably r-PE has a density ranging from 0.940 to 0.965 and a melt flow rate (190°C/2.16 Kg ISO 1133-1) from 0.1 to 1 g/10 min.

Prior its use, the plastic mixture containing rHDPE undergoes standard recycling process including collection, shredding, sorting and washing. Although the sorted rHDPE is constituted by a large preponderance of HDPE it invariably contains minor amounts of other polymeric and/or inorganic components. In particular, the r-PE according to the present disclosure, contains inclusion of polypropylene in an amount from 1 to 15% wt preferably from 5% up to 10%wt of the total r-PE component.

In a preferred embodiment, the r-PE includes a crystalline polyethylene fraction in which in which the amount of recurring units derived from propylene in the polyethylene chains is lower than 10 wt% and most preferably they are absent, i.e, most preferably r-PE is ethylene homopolymer containing the above mentioned inclusions. Preferably, the (r-PE) has a melt flow rate (190°C/2.16 Kg ISO 1133-1) from 0.1 to 1.0 g/10 min and more preferably from 0.1 to 0.5 g/10 min.

The r-PE is commercially available. An example of a suitable r-PE grade is represented by the grade sold by Lyondellbasell under the tradename *Hostalen* QCP5603 in the ivory or grey versions.

The whole polypropylene composition of the present disclosure preferably shows a tensile modulus value lower than that of component A). Preferably embodiment, the tensile modulus of the whole propylene polymer composition ranges from to 750 MPa to 1700 MKpa more preferably from 800 to 1500 MPa.

The value of Charpy impact at 23°C ranges from 20.0 Kj/m$^2$ to 3.0 Kj/m$^2$; the value of Charpy impact at 0°C ranges from 3.0 Kj/m$^2$ to 14.0 Kj/m$^2$ ; the value of Charpy impact at -20°C ranges from 2.5.0 Kj/m$^2$ to 10.0 Kj/m$^2$.

The whole propylene composition of the present disclosure can be obtained by mechanical blending of the components (A) and (B) according to conventional techniques.

The final composition comprising the components (A) and (B) may be added with conventional additives, fillers and pigments, commonly used in olefin polymers such as nucleating agents, extension oils, mineral fillers, and other organic and inorganic pigments. In particular, the addition of inorganic fillers, such as talc, calcium carbonate and mineral fillers, also brings about an improvement to some mechanical properties, such as flexural modulus and HDT. Talc can also have a nucleating effect.

The nucleating agents may be added to the compositions of the present disclosure in quantities ranging from 0.05 to 2% by weight, more preferably from 0.1 to 1% by weight, with respect to the total weight, for example.

The propylene polymer composition of the present disclosure can be extruded to form films or sheets for a variety of applications. Particularly preferred is the use of the polypropylene composition for the preparation of sheets for roofing applications.

The following examples are given in order to illustrate, but not limit the present disclosure.

**EXAMPLES**

**CHARACTERIZATIONS**

**Xylene-soluble (XS) Fraction at 25 °C**

2.5 g of polymer and 250 ml of xylene are introduced in a glass flask equipped with a refrigerator and a magnetic stirrer. The temperature is raised in 30 minutes up to the boiling point of the solvent. The resulting clear solution is then kept under reflux and stirred for 30 minutes. The closed flask is then kept for 30 minutes in a bath of ice and water, then in a thermostatic water bath at 25 °C for 30 minutes. The resulting solid is filtered on quick filtering paper. 100 ml of the filtered liquid is poured in a previously weighed aluminum container, which is heated on a heating plate under nitrogen flow to remove the solvent by evaporation. The container is then kept on an oven at 80 °C under vacuum until a constant weight is obtained. The weight percentage of polymer soluble in xylene at room temperature is then calculated.
The content of the xylene-soluble fraction is expressed as a percentage of the original 2.5 grams and then, by the difference (complementary to 100%), the xylene insoluble percentage (%);

**Melt Flow Rate (MFR)**

Measured according to ISO 1133-1 at 190°C or 230 °C with a load of 2.16 kg, as specified.

**Intrinsic Viscosity (IV)**

The sample is dissolved in tetrahydronaphthalene at 135 °C and then poured into a capillary viscometer. The viscometer tube (Ubbelohde type) is surrounded by a cylindrical glass jacket; this setup allows for temperature control with a circulating thermostatic liquid. The downward passage of the meniscus is timed by a photoelectric device.
The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine [ η ].
**Polydispersity index:** Determined at a temperature of 200 °C by using a parallel plates rheometer model RMS-800 marketed by RHEOMETRICS (USA), operating at an oscillation frequency which increases from 0.1 rad/sec to 100 rad/sec. From the crossover modulus one can derive the P.I. by way of the equation:

$$P.I. = 105/Gc$$

in which Gc is the crossover modulus which is defined as the value (expressed in Pa) at which G'=G" wherein G' is the storage modulus and G" is the loss modulus.

**Ethylene (C2) content**

**$^{13}$C NMR of propylene/ethylene copolymers**

$^{13}$C NMR spectra were acquired on a Bruker AV-600 spectrometer equipped with cryoprobe, operating at 160.91 MHz in the Fourier transform mode at 120°C.
The peak of the $S_{\beta\beta}$ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as internal reference at 29.9 ppm. The samples were dissolved in 1,1,2,2-tetrachloroethane-d2 at 120°C with a 8 % wt/v concentration. Each spectrum was acquired with a 90° pulse, 15 seconds of delay between pulses and CPD to remove 1H-13C coupling. 512 transients were stored in 32K data points using a spectral window of 9000 Hz.
The assignments of the spectra, the evaluation of triad distribution and the composition were made according to Kakugo ("Carbon-13 NMR determination of monomer sequence distribution in ethylene-propylene copolymers prepared with δ-titanium trichloride-diethylaluminum chloride" M. Kakugo, Y. Naito, K. Mizunuma and T. Miyatake, Macromolecules 1982, 15, 4, 1150-1152) using the following equations:

$$PPP = 100 \, T_{\beta\beta}/S$$

$$PPE = 100 \, T_{\beta\delta}/S$$

$$EPE = 100 \, T_{\delta\delta}/S$$

$$PEP = 100 \, S_{\beta\beta}/S$$

$$PEE = 100 \, S_{\beta\delta}/S$$

$$EEE = 100 \, (0.25 \, S_{\gamma\delta}+0.5 \, S_{\delta\delta})/S$$

$$S = T_{\beta\beta} + T_{\beta\delta} + T_{\delta\delta} + S_{\beta\beta} + S_{\beta\delta} + 0.25 \, S_{\gamma\delta} + 0.5 \, S_{\delta\delta}$$

The molar percentage of ethylene content was evaluated using the following equation:
E% mol = 100 $^*$ [PEP+PEE+EEE]The weight percentage of ethylene content was evaluated using the following equation:

$$E\% \text{ wt.} = \frac{100 * E\% \text{ mol} * MW_E}{E\% \text{ mol} * MW_{E} + P\% \text{ mol} * MW_P}$$

where P% mol is the molar percentage of propylene content, while $MW_E$ and $MW_P$ are the molecular weights of ethylene and propylene, respectively.

The product of reactivity ratio $r_1r_2$ was calculated according to Carman (C.J. Carman, R.A. Harrington and C.E. Wilkes, Macromolecules, 1977; 10, 536) as:

$$r_1r_2 = 1+\left(\frac{EEE+PEE}{PEP}+1\right)-\left(\frac{P}{E}+1\right)\left(\frac{EEE+PEE}{PEP}+1\right)^{0.5}$$

The tacticity of Propylene sequences was calculated as mm content from the ratio of the PPP $mmT_{\beta\beta}$ (28.90-29.65 ppm) and the whole Tpp (29.80-28.37 ppm).

**Density**

Density has been measured according to ASTM D792 or ISO 1183 as indicated

**Samples for the mechanical tests**

Samples have been obtained according to ISO 1873-2:2007.
**Charpy impact test** is determined according to ISO 179-1eA, and ISO 1873-2
**Elongation at yield:** measured according to ISO 527.
**Elongation at break:** measured according To ISO 527
**Stress at break:** measured according to ISO 527.
**Tensile Modulus** according to ISO 527-2,
**Tear Resistance** according to the method ASTM D 1004 on 1mm-thick extruded sheets. Crosshead speed: 51 mm/min; V-shaped die cut specimen.

**Shore D** on injection molded, compression molded plaques and extruded sheets according to the method ISO 868 (15 sec);
**Shore A** on injection molded sample measured according to ASTM D2240;
**Density** measured according to ASTM D792

### Melting point and crystallization point

The melting point has been measured by using a DSC instrument according to ISO 11357-3, at scanning rate of 20C/min both in cooling and heating, on a sample of weight between 5 and 7 mg., under inert $N_2$ flow. Instrument calibration made with Indium.

Determination of PP inclusions in r-PE

$^{13}$C NMR spectra were acquired on a Bruker AV-600 spectrometer equipped with cryoprobe, operating at 160.91 MHz in the Fourier transform mode at 120°C.
The peak of the $CH_2$ ethylene was used as internal reference at 29.9 ppm. The samples were dissolved in 1,1,2,2-tetrachloroethane-*d2* at 120°C with a 8 % wt/v concentration. Each spectrum was acquired with a 90° pulse, 15 seconds of delay between pulses and CPD to remove $^1$H-$^{13}$C coupling. 512 transients were stored in 32K data points using a spectral window of 9000 Hz.
Molar composition was obtained according to the following using peak areas (table 1):

$$P = 100 \ A_3/S$$

$$E = 100 \ 0.5A_2/S$$

Where

$$S = 0.5A_2 + A_3$$

Molar content was transformed in weight using monomers molecular weight.

Table 1: Assignment of PP/PE mixtures

| Number | Chemical Shift (ppm) | Carbon | Sequence |
|---|---|---|---|
| 1 | 48.8-45.4 | $CH_2$ | P |
| 2 | 29.9 | $CH_2$ | E |
| 3 | 29.0-28.0 | CH | P |
| 4 | 21.8-19.8 | CH3 | P |

EXAMPLES

**Component A)**

Component A) is a commercial homo polymer sold as HA840R by Lyondellbasell. The homopolymer has been visbreaked with peroxides to achieve an MFR of 70 g/10 min.

**Component T1)**

Component T1 is a ethylene 1-octene copolymer, commercial grade Infuse 9807 having an MFR, 190° 2.16 kg, of 15 g/10 min, density (ASTM D792) of 0.866 $g/cm^3$, shore A of 55.

**Component T2**

Component T2 is commercial grade QCP5603 ivory (a r-PE commercialized by Lyondellbasell containing 10%wt of PP inclusions) having a density (ISO 1183-1) of 0.95 g/cm$^3$ and a Melt Index "E" of 0.3 g/10 min.

**Example 1**

The polymer particles of component A) are introduced in an extruder (Berstorff extruder), wherein they are mixed with various amount oof components T1 and T2 as reported in table 2, 1000 ppm of M.S. 168 as an additive have been added. The polymer particles are extruded under nitrogen atmosphere in a twin screw extruder, at a rotation speed of 250 rpm and a melt temperature of 200-250° C. The characterization of the obtained composition is reported in table 2.

Table 2

|  | Ex 1 |
|---|---|
| Component A | 60 |
| Component B | 40 |
| Component T1 (in B) | 25 |
| Component T2 (In B) | 75 |
| MFR, g/10 min | 15.7 |
| Tm°C | 162.9 |
| Tc °C | 1202.6 |
| Tensile Modulus; (N/mm$^2$) | 1130 |
| Charpy impact 23°C Kj/ m$^2$ | 8.5 |
| Charpy impact 0°C Kj/ m$^2$ | 5.5 |
| Charpy impact -20°C Kj/ m$^2$ | 3.6 |
| D/T TT °C | <-47 |

The above data show that the polymer compositions according to the present disclosure have an improved balance of softness and mechanical properties.

**Claims**

1. A propylene polymer composition having a value of melt flow rate (ISO 1133-1 230°C/2.16 kg) ranging from 3.0 g/lOmin to 70.0 g/lOmin comprising:

A) 50 wt% to 80 wt%, of a propylene homopolymer or a propylene ethylene copolymer containing up to 22 %wt of ethylene, said propylene homopolymer or a propylene ethylene copolymer having a melt flow rate (ISO 1133-1 230°C/2.16 kg) ranging from 20.0 to 100.0g/10 min;
B) 50 wt% to 20 wt% of a blend comprising:

T1) from 10 wt% to 50 wt% of a copolymer of ethylene and one monomer selected from 1-butene, 1-hexene or 1-octene said copolymer having preferably a MFR (ISO 1133-1 at 190°C 2.16 kg of load) comprised between 0.5 g/10 min and 55.0 g/10 min; and having a Shore A hardness (ASTM 2240) ranging from 20 to 80.
T2) from 50 wt% to 90 wt% of recycled polyethylene (r-PE) having a melt flow rate (ISO 1133-1 190°C/2.16 Kg) from 0.1 to 10.0 g/10 min and containing an amount of polypropylene inclusions ranging from 1 wt% to 15 wt% of the total r-PE component;
the sum of the amount of T1 and T2 being 100;

the sum of the amount of A) and B) being 100.

2.  The propylene polymer composition according to claim 1 wherein the component (A) ranges from 55 wt% to 75 wt%;and component (B) ranges from 25 wt% to 45 wt%.

3.  The propylene polymer composition according to claims 1 or 2 wherein T1 ranges from 15 wt% to 40wt% and T2 ranges from 60 wt% to 85 wt%;

4.  The propylene polymer composition according to any of the preceding claims wherein T1 has the MFR (measured at 190°C 2.16 kg of load) from 1.0 g/10 min and 20.0 g/10 min;

5.  The propylene polymer composition according to any of the preceding claims having a melt flow rate (ISO 1133-1 230°C/2.16 kg) ranging from 8.0 g/lOmin to 45.0 g/lOmin.

6.  The propylene polymer composition according to any of the preceding claims in which component (A) has a melt flow rate (ISO 1133-1 230°C/2.16 kg) ranging from 60.0 to 90.0g/10min.

7.  The propylene polymer composition according to any of the preceding claims wherein component (A) is a propylene homopolymer.

8.  The propylene polymer composition according to any of the preceding claims wherein component (A) ranges from 58 wt% to 72 wt% and component B ranges from 35wt% to 45 wt%.

9.  The propylene polymer composition according to any of the preceding claims wherein (T1) ranges from 20 wt% to 30 wt% and T2 ranges from 70 wt% to 80 wt%.

10. The polypropylene compositions according to any of the preceding claims wherein component (T2) has an amount of PP inclusions ranging from 5 wt% to 10 wt% based on the total amount of component (T2).

11. The polypropylene compositions according to anyone of the preceding claims wherein component (T2) has a density (ISO 1183-1) ranging from 0.940 g/cm$^3$ to 0.965 g/cm$^3$ and a melt flow rate (190°C/2.16 Kg ISO 1133-1) from 0.1 to 1.0 g/10 min.

12. The propylene polymer composition according to any of the preceding claims wherein component T1 is copolymer of ethylene and one monomer selected from 1-butene and 1-octene.

13. The propylene polymer composition according to any of the preceding claims wherein component T1 has a Shore A hardness (ASTM 2240) ranging from 20 to 80.

14. The propylene polymer composition according to any of the preceding claims wherein component T1 is an ethylene 1-octene block copolymer having a density (ASTM D792) ranging from 0.863 g/cm$^3$ to 0.869 g/cm$^3$ a MFR (measured at 190°C 2.16 kg of load) ranging from 0.5 g/10 min to 16.0 g/10 min.

15. An extruded article obtained from the propylene polymer composition according to any of the preceding claims.

Europäisches
Patentamt

European
Patent Office

Office européen
des brevets

# EUROPEAN SEARCH REPORT

Application Number

**EP 22 18 8773**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/090105 A1 (BASELL POLIOLEFINE ITALIA SRL [IT]) 5 May 2022 (2022-05-05)<br>* page 15; examples Ex1, C1; tables 1,2 *<br>* paragraphs [0020] – [0033] *<br>* claims 1-15 *<br>----- | 1-15 | INV.<br>C08L23/12 |
| A | WO 2022/002602 A1 (BASELL POLIOLEFINE ITALIA SRL [IT]) 6 January 2022 (2022-01-06)<br>* claim 1 *<br>* page 16 – page 17; examples; tables 2,3 *<br>* paragraphs [0001] – [0006], [0010], [0011] *<br>----- | 1-15 | |
| | | | TECHNICAL FIELDS SEARCHED (IPC)<br><br>C08L |

The present search report has been drawn up for all claims

| Place of search | Date of completion of the search | Examiner |
|---|---|---|
| Munich | 11 January 2023 | Lippert, Sigrid |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 22 18 8773**

This annex lists the patent family members relating to the patent documents cited in  the above-mentioned European search report.
The members are as contained in the European Patent Office EDP file on
The European Patent Office is in no way liable for these particulars which are merely given for the purpose of information.

**11-01-2023**

| Patent document cited in search report | Publication date | Patent family member(s) | Publication date |
|---|---|---|---|
| WO 2022090105    A1 | 05-05-2022 | NONE | |
| WO 2022002602    A1 | 06-01-2022 | NONE | |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 472946 A
- US 4522930 A
- EP 045977 A2
- WO 0063261 A
- WO 0157099 A
- US 4399054 A
- US 4469648 A

**Non-patent literature cited in the description**

- **HUGGINS, M.L.** *J. Am. Chem. Soc.,* 1942, vol. 64, 2716
- **C. J. CARMAN ; R. A. HARRINGTON ; C. E. WILKES.** Monomer Sequence Distribution in Ethylene-Propylene Rubber Measured by 13C NMR. 3. Use of Reaction Probability Mode. *Macromolecules,* 1977, vol. 10, 536
- **M. KAKUGO ; Y. NAITO ; K. MIZUNUMA ; T. MIYATAKE.** Carbon-13 NMR determination of monomer sequence distribution in ethylene-propylene copolymers prepared with $\delta$-titanium trichloride-diethylaluminum chloride. *Macromolecules,* 1982, vol. 15 (4), 1150-1152
- **C.J. CARMAN ; R.A. HARRINGTON ; C.E. WILKES.** *Macromolecules,* 1977, vol. 10, 536